# EUROPÄISCHE PATENTANMELDUNG

(11) **EP 2 298 833 A1**
(43) Veröffentlichungstag der Anmeldung: **23.03.2011**
(21) Anmeldenummer: 09170917.0
(22) Anmeldetag: 22.09.2009
(51) Int. Cl.: C08K 5/00, C04B 7/42, C04B 40/00, C08G 65/332

(54) **Eisen(III)-Komplexbildner zur Stabilisierung von Kammpolymeren in mineralischen Bindemitteln**

(71) Anmelder: Sika Technology AG, 6340 Baar (CH)
(72) Erfinder: Bürge, Christian, 5503, Schafisheim (CH); Peter, André, 8307, Effretikon (CH); Kurz, Christophe, 8165, Oberweningen (CH); Wombacher, Franz, 8916, Jonen (CH)
(74) Vertreter: Sika Patent Attorneys

(57) **Zusammenfassung**

Die vorliegende Erfindung betrifft Zusammensetzungen umfassend ein Kammpolymer und einen Fe(III)-Komplexbildner X, welcher ausgewählt ist aus der Gruppe bestehend aus Thiocyanaten, kondensierten Phosphaten, Aminen, Aminoessigsäuren, Oxycarbonsäuren und Verbindungen der Formel (V).

Zusätzlich betrifft die Erfindung ein Verfahren zur Stabilisierung von Kammpolymeren in Gegenwart von Fe(III) unter Verwendung von solchen Fe(III)-Komplexbildnern X.

## Beschreibung

### Technisches Gebiet

Die Erfindung betrifft das Gebiet der Zusatzmittel für hydraulisch abbindende Zusammensetzungen.

### Stand der Technik

Es ist bereits seit langem bekannt, dass die Ausgangsprodukte für die Zementherstellung einen mehr oder minder hohen Chromgehalt aufweisen können. Insbesondere das Vorliegen von wasserlöslichem Chrom(VI) im Zementmehl kann in der Folge von längerem Hautkontakt zu Hautausschlägen, insbesondere dem sogenannten Maurerekzem, führen und ist aus diesem Grunde unerwünscht. Bekannt sind ferner Verfahren und Maßnahmen, um den unerwünschten löslichen Chrom(VI)-Gehalt zu reduzieren und in der reduzierten Stufe zu fixieren. Zu diesem Zweck wird beispielsweise Eisen(II)-Sulfat eingesetzt, wobei der wasserlösliche Chromatanteil in Zementen durch Eisen(II)-Sulfat zu dreiwertigem Chrom reduziert wird und Eisen(II)-lonen zu Eisen(III)-lonen oxidiert werden.

Durch Oxidation mittels Luftsauerstoff von Eisen(II)-Sulfat zur Eisen(III)-Verbindung können Beimengungen von bekannten Eisen(II)-Verbindungen zum trockenen Zementmehl jedoch ihre reduzierende Wirkung häufig schon nach relativ kurzer Zeit verlieren, da sie bereits unter Luftzutritt zu unwirksamen Eisen(III)-Verbindungen oxidiert werden können. Besonders nachteilig ist an den Eisen(III)-Verbindungen, dass sie im Zement vorhandene organische Verbindungen, insbesondere Kammpolymere, zu schädigen vermögen, beispielsweise durch Eisen(III)-katalysierte Oxidation der organischen Verbindung mit Luftsauerstoff.

Aus diesen Gründen müssen Eisen(II)-Verbindung in beträchtlichen Mengen, typischerweise 0,4 Massen-% Eisen(II)-Verbindung bezogen auf den Zement, zugegeben werden, um eine sichere Chromreduktion zu gewährleisten. Dies führt demzufolge zu einem beträchtlichen Anteil an potentiellen Eisen(III)-Verbindungen.

Kammpolymere werden bereits seit längerem in der Betontechnologie als Dispergiermittel, insbesondere als Hochleistungsverflüssiger, wegen ihrer starken Wasserreduktion eingesetzt.

Kammpolymere sind bei erhöhter Temperatur nur bedingt stabil und werden innert Tagen zerstört, so dass sie ihre Wirkung nicht mehr entfalten können. Es hat sich insbesondere gezeigt, dass die Wirkung der Kammpolymere stark abnimmt, wenn sie in Gegenwart von anorganischen Pulvern, insbesondere hydraulischen Bindemitteln, in Verbindung mit Eisen(III)-Verbindungen bei erhöhter Temperatur verwendet werden. Solche Probleme treten beispielsweise bei der Lagerung von hydraulischen Bindemitteln oder beim Mahlen von hydraulischen Bindemitteln auf.

Bei der Lagerung werden die hydraulischen Bindemittel meist bei über 80°C, oft sogar bei über 120°C, in Silos aufbewahrt. Zudem liegen in Silos, insbesondere in Hochsilos, hohe Drücke vor, die besondere Anforderungen an die Stabilisierung von Polymeren stellen. Werden dem Bindemittel zuvor Kammpolymere zugegeben, was insbesondere bei der Herstellung von Fertigmischungen, beispielsweise Zementfertigmischungen, erwünscht ist, nimmt nach der Lagerung bei den hohen Temperaturen die Wirkungsweise der Kammpolymere stark ab.

Kammpolymere werden zum Teil auch als Mahlhilfen beim Mahlen von hydraulischen Bindemitteln, beispielsweise von Klinkern, eingesetzt, wie beispielsweise in der WO 2005/123621A1 beschrieben. Da beim Mahlen ebenfalls hohe Temperaturen vorliegen, können die Kammpolymere weitgehend zerstört werden und ihre Wirkung nicht mehr entfalten.

### Darstellung der Erfindung

Aufgabe der vorliegenden Erfindung ist es daher, eine Zusammensetzung und ein Verfahren zur Verfügung zu stellen, welches Kammpolymere in Gegenwart von Eisen(III)-Verbindungen, insbesondere in mineralischen Bindemitteln, insbesondere bei erhöhter Temperatur, vor Schädigung durch Eisen(III)-Verbindungen schützt.

Überraschenderweise wurde gefunden, dass dies durch eine Zusammensetzung gemäss Anspruch 1 erreicht werden kann. Es konnte nun festgestellt werden, dass durch Zusammensetzungen umfassend ein Kammpolymer und mindestens einen Fe(III)-Komplexbildner X, welcher ausgewählt ist aus der Gruppe bestehend aus Thiocyanaten, kondensierten Phosphaten, Aminen, Aminoessigsäuren, Oxycarbonsäuren und Verbindungen der Formel (V) Kammpolymere vor Schädigung durch Eisen(III)-Verbindungen geschützt werden können und auch bei erhöhter Temperatur in Gegenwart von Eisen(III)-Verbindungen ihre Wirkung über längere Zeit beibehalten können.

Insbesondere überraschend ist, dass eine Zusammensetzung umfassend ein Kammpolymer und mindestens einen Fe(III)-Komplexbildner X, welche zusätzlich ein Antioxidationsmittel aufweist, besonders geeignet ist, Kammpolymere vor Schädigung durch Eisen(III)-Verbindungen zu schützen.

Weiterhin hat sich gezeigt, dass auf diese Weise geschützte Kammpolymere ihre Wirkung als Mahlhilfsmittel und/oder als Dispergiermittel, insbesondere als Verflüssiger, auch noch erhalten können, nachdem sie beim Mahlprozess oder bei langer Lagerung hohen Temperaturen ausgesetzt waren.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Weg zur Ausführung der Erfindung

Die vorliegende Erfindung betrifft eine Zusammensetzung umfassend ein Kammpolymer und mindestens einen Fe(III)-Komplexbildner X, welcher ausgewählt ist aus der Gruppe bestehend aus Thiocyanaten, kondensierten Phosphaten, Aminen, Aminoessigsäuren, Oxycarbonsäuren und Verbindungen der Formel (V).

Unter dem Begriff "Fe(III)-Komplexbildner" wird im ganzen vorliegenden Text ein neutrales Molekül und/oder lon verstanden, welcher geeignet ist, sich als sogenannter Ligand an einem Fe(III), dem sogenannten Zentral-lon, anzuordnen und eine Komplexverbindung zu bilden, wie sie beschrieben ist in CD Römpp Chemie Lexikon, 9. Auflage, Version 1.0, Georg Thieme Verlag, Stuttgart.

Es ist von Vorteil, wenn der Fe(III)-Komplexbildner **X** eine Komplexbildungskonstante für Fe(III) aufweist, die 10-mal, insbesondere 1000-mal, grösser ist als die Komplexbildungskonstante für Fe(II). Dies ist insbesondere dann vorteilhaft, wenn eine Komplexbildung Fe(III)-Komplexbildner **X** mit Fe(II) nachteilig ist.

Unter dem Begriff "Komplexbildungskonstante" wird im ganzen vorliegenden Text die Gleichgewichtskonstante K₁ für die Bildung einer Komplexverbindung aus Fe(III), respektive Fe(II), (Zentralion) und einem Fe(III)-Komplexbildner **X** (Ligand) verstanden, gemessen in Wasser bei Raumtemperatur.

Als Thiocyanate sind 2-Nitro-4-thiocyanatoanilin und Benzylthiocyanat, insbesondere Benzylthiocyanat, bevorzugt.

Als kondensierte Phosphate sind Pyrophosphat, Tripolyphosphat und Polyphosphat bevorzugt.

Amine und Aminoessigsäuren sind vorteilhaft, da sie mit Fe(III) sehr stabile Komplexverbindungen eingehen können.

Als Amine sind Triethanolamin (TEA), Ethylendiamin (EDA), 1-[2-(bis(2-hydroxypropyl)amino)ethyl-(2-hydroxypropyl)amino]propan-2-ol (Quadrol), N,N-Di-(hydroxyethyl)-glycin (DHEG), Diethylentriamin (DETA), Tetraethylenpentamin (TEPA), Triethylentetramin (TETA) bevorzugt.

Als Aminoessigsäuren sind Nitrilotriessigsäure (NTA), Ethylendiamintetraessigsäure (EDTA), Cyclohexandiamintetraessigsäure (CDTA), Diethylentriaminpentaessigsäure (DTPA), Ethylenglykol-bis(amino-ethylether)-N,N,N'N'-Tetraessigsäure (EGTA), N-(2-Hydroxyethyl)-ethylendiamin-N,N,N'-triessigsäure (HEDTA), Triethylentetraminhexaessigsäure (TTHA), Glycin, Glutaminsäure, beziehungsweise deren Salze, bevorzugt.

Glycin hat eine Stabilitätskonstante für Fe(III) von 6.3 x 10¹⁰ und für Fe(II) von 2 x 10⁴. Glutamat hat eine Stabilitätskonstante für Fe(III) von 6.3 x 10¹³ und für Fe(II) von 4 x 10⁴. NTA hat eine Stabilitätskonstante für Fe(III) von 8 x 10¹⁵. EDTA hat eine Stabilitätskonstante für Fe(III) von 1.3 x 10²⁵ und für Fe(II) von 2 x 10¹⁴.

Als Oxycarbonsäuren sind 2,3-Dihydroxybutandisäure, 2-Hydroxy-1,2,3-propantricarbonsäure (Zitronensäure), Glukonsäure, α-Hydroxybuttersäure, Hydroxybernsteinsäure bevorzugt.

Glycolate haben eine Stabilitätskonstante für Fe(III) von 5 x 10³ und für Fe(II) von 8 x 10¹. Malonate haben eine Stabilitätskonstante für Fe(III) von 2 x 10⁹ und für Fe(II) von 5 x 10⁵. Citrat hat eine Stabilitätskonstante für Fe(III) von 3.2 x 10¹³ und für Fe(II) von 5 x 10⁵. Weinsäure hat eine Stabilitätskonstante für Fe(III) von 7.2 x 10¹¹.

Bei Verbindungen der Formel (V) 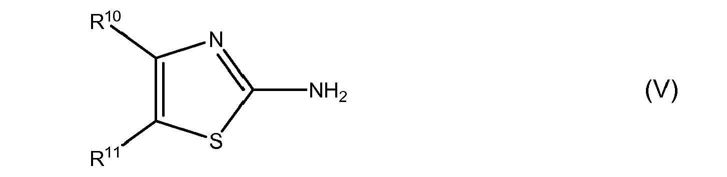 stehen R¹⁰ und R¹¹ unabhängig voneinander für H, Halogenatom, NO₂ oder einen, allenfalls verzweigten, gesättigten oder ungesättigten Alkylrest mit 1 bis 25 C-Atomen oder einen Arylrest mit 6 bis 14 C-Atomen oder einen Acylrest mit 1 bis 10 C-Atomen oder einen Carbonylrest mit 1 bis 10 C-Atomen oder einen Carboxylrest mit 1 bis 10 C-Atomen, oder
R¹⁰ und R¹¹ sind Teil von einem aromatischen oder cycloaliphatischen Ring, insbesondere einem aromatischen 6-Ring.

Beispiele für Verbindungen der Formel (V) sind 2-Amino-5-bromothiazol, 2-Amino-5-chlorothiazol, 2-Amino-5-nitrothiazol, 2-Aminothiazol, 2-Aminothiazol-5-carboxaldehyd, 2-Amino-4-thiazolcarbonsäure, 2-Amino-5-methylthiazol, 2-Amino-4-(trifluoromethyl)thiazol-5-carbonsäure, 2-Amino-4-thiazolessigsäure, 2-Amino-4,5-dimethylthiazol, 2-Amino-α-(methoxyimino)-4-thiazolessigsäure, 5-Acetyl-2-amino-4-methylthiazol, 5-Acetyl-2-amino-4-methylthiazol, Methyl-2-amino-4-thiazolacetat, Methyl-2-amino-4-thiazolacetat, 2-Amino-4,6-difluorobenzothiazol, 2-Amino-5-bromobenzothiazol, 2-Amino-6-bromobenzothiazol, 2-Amino-4-chlorobenzothiazol, 2-Amino-6-chlorobenzothiazol, 2-Amino-6-fluorobenzothiazol, 2-Amino-6-nitrobenzothiazol, 2-Aminobenzothiazol, Ethyl-2-amino-α-(hydroxyimino)-4-thiazolacetat, Ethyl-2-amino-4-methylthiazole-5-carboxylat, Ethyl-2-aminothiazole-4-acetat, Ethyl-2-aminothiazole-4-acetat, 2-Amino-4,5,6,7-tetrahydrobenzothiazol, 2-Amino-6-(trifluoromethyl)benzothiazol, 2-Amino-6-thiocyanatobenzothiazol, 2-Amino-4-methoxybenzothiazol, 2-Amino-6-methoxybenzothiazol, 2-Amino-4-methyl-benzothiazol, 2-Amino-6-methylbenzothiazol, 2-Amino-4-(3,4-difluorophenyl)-thiazol, 2-Amino-4-(4-bromophenyl)thiazol, 2-Amino-4-(4-chlorophenyl)thiazol, 2-Amino-4-(4-nitrophenyl)thiazol, 2-Amino-4-phenylthiazol, 2-Amino-4-phenylthiazol, 2-Amino-6-ethoxybenzothiazol, 2-Amino-5,6-dimethylbenzo-thiazol, 2-Amino-4-(*p*-tolyl)thiazol, 2-Amino-5-methyl-4-phenylthiazol, 4-(4-Acetamidophenyl)-2-aminothiazol, Ethyl-2-amino-4-(4-bromophenyl)thiazol-5-carboxylat, Ethyl-2-amino-4-phenylthiazol-5-carboxylat, 2-Amino-4-phenyl-5-tetradecylthiazol.

Insbesondere bevorzugt ist 2-Aminothiazol.

Vorzugsweise ist der Fe(III)-Komplexbildner **X** eine Verbindung der Formel (V).

Es ist weiter besonders vorteilhaft, wenn es sich bei dem Fe(III)-Komplexbildner **X** nicht um Stoffe handelt, welche bei der Verwendung in mineralischen Bindemitteln zu einer Geruchsbelästigung führen.

Es ist insbesondere von Vorteil, wenn der Fe(III)-Komplexbildner **X** eine Reduktion von Fe(III) zu Fe(II) bewirkt.

Die Eisen(II)-Verbindung zur Reduktion von löslichem Chrom(VI) kann dem Zement entweder als Zementzusatzmittel während der Zementherstellung zugegeben werden oder als Betonzusatzmittel bei der Betonherstellung eingesetzt werden. Beim Einsatz als Mahlzusatzmittel kann die Dosierung dem löslichen Chrom(VI)-Gehalt angepasst werden. Dabei werden in der Regel 0,4 Massen-% (bezogen auf den Zement) Eisen(II)-sulfat zugegeben, so dass die hergestellten Zemente die Anforderungen der Richtlinie 2003/53/EG erfüllen. Bei dem Einsatz als Betonzusatzmittel bei der Betonherstellung kann die Zugabemenge der Eisen(II)-Verbindungen nicht an den Chrom(VI)-Gehalt des Zementes angepasst werden, da in der Regel der Chrom(VI)-Gehalt der Zemente nicht bekannt ist. In Deutschland kann der Chrom(VI)-Gehalt bis zu 2 mg/kg betragen.

Als Eisen(II)-Verbindung wird typischerweise Eisen(II)-sulfat eingesetzt, es sind aber auch andere Eisen(II)-Verbindungen, insbesondere Eisen(II)-salze, möglich.

Die Eisen(III)-lonen entstehen typischerweise durch Oxidation von Eisen(II)-lonen der erwähnten Eisen(II)-Verbindung, insbesondere durch Luftsauerstoff oder durch Chrom(VI)-lonen. Eisen(III)-lonen können jedoch auch anderen Ursprungs sein. So können Eisen(III)-lonen beispielsweise von Eisen(III)-Verbindungen, insbesondere Eisen(III)-Salzen stammen.

Unter dem Begriff "Kammpolymer" wird im vorliegenden Dokument ein Kammpolymer bestehend aus einer linearen Polymerkette (=Hauptkette), an welcher über Ester- oder Ethergruppen Seitenketten angebunden sind, verstanden. Die Seitenketten bilden hierbei bildlich gesprochen die "Zähne" eines "Kamms".

Bevorzugt handelt es sich bei dem mindestens einen Kammpolymer um ein Kammpolymer **KP** mit über Ester- oder Ethergruppen an die Hauptkette angebunden Seitenketten.

Als Kammpolymer **KP** geeignet sind einerseits Kammpolymere mit über Ethergruppen an das lineare Polymergerüst gebundenen Seitenketten.

Über Ethergruppen an das lineare Polymergerüst gebundene Seitenketten können durch Polymerisation von Vinylethern oder Allylethern eingeführt werden.

Derartige Kammpolymere sind beispielsweise in WO 2006/133933 A2 beschrieben, deren Inhalt hiermit insbesondere durch Bezugnahme eingeschlossen wird, offenbart sind. Die Vinylether oder Allylether weisen insbesondere die Formel (II) auf.

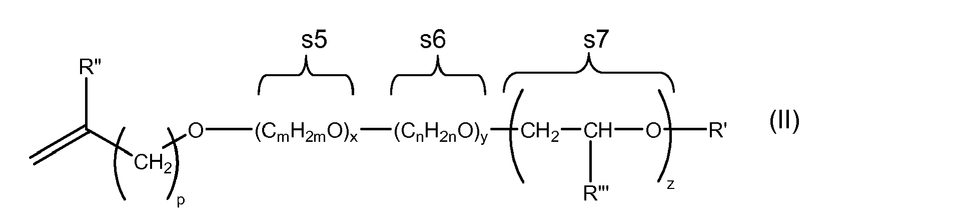

Hierbei steht R' für H oder für einen aliphatischen Kohlenwasserstoffrest mit 1 bis 20 C-Atomen oder einen cycloaliphatischen Kohlenwasserstoffrest mit 5 bis 8 C-Atomen oder ein, gegebenenfalls substituierter, Arylrest mit 6 bis 14 C-Atomen. R" steht für H oder für eine Methylgruppe und R'" steht für einen unsubstituierten oder substituierten Arylrest, insbesondere für einen Phenylrest.

Weiterhin stehen p für 0 oder 1; m und n unabhängig voneinander je für 2, 3 oder 4; und x und y und z unabhängig voneinander je für Werte aus dem Bereich von 0 bis 350.

Die Abfolge der in Formel (II) als s5, s6 und s7 bezeichneten Teilstrukturelemente kann hierbei alternierend, blockartig oder zufällig angeordnet sein.

Insbesondere sind derartige Kammpolymere Copolymerisate von Vinylether oder Allylether mit Maleinsäureanhydrid, Maleinsäure, und/oder (Meth)acrylsäure.

Als Kammpolymer **KP** geeignet sind andererseits Kammpolymere mit über Estergruppen an das lineare Polymergerüst gebundenen Seitenketten. Diese Art von Kammpolymeren **KP** ist gegenüber den Kammpolymeren mit über Ethergruppen an das lineare Polymergerüst gebundenen Seitenketten bevorzugt.

Besonders bevorzugte Kammpolymere **KP** sind Copolymere der Formel (I).

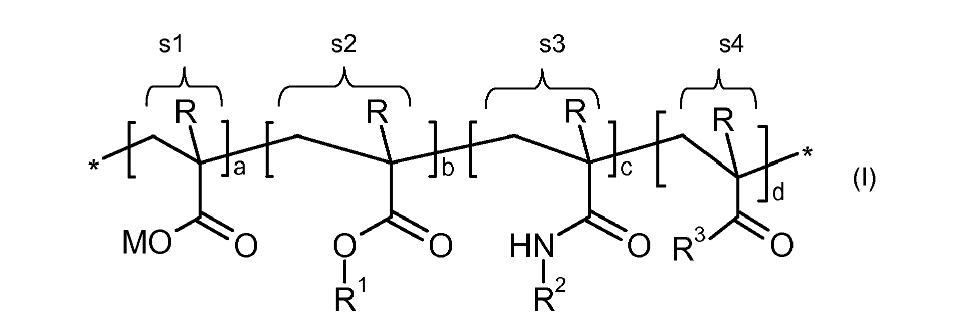

Hierbei stehen M unabhängig voneinander für H⁺, Alkalimetallion, Erdalkalimetallion, zwei- oder dreiwertiges Metallion, Ammoniumion, oder organische Ammoniumgruppe. Der Term "unabhängig voneinander" bedeutet im vorliegenden Dokument jeweils, dass ein Substituent unterschiedliche zur Verfügung stehenden Bedeutungen in demselben Molekül aufweisen kann. So kann beispielsweise das Copolymer der Formel (I) gleichzeitig Carbonsäuregruppen und Natriumcarboxylatgruppen aufweisen, das heisst, dass für M in diesem Falle H⁺ und Na⁺ unabhängig voneinander bedeuten.

Dem Fachmann ist klar, dass es sich einerseits um ein Carboxylat handelt, an welches das lon M gebunden ist, und dass andererseits bei mehrwertigen lonen M die Ladung durch Gegenionen ausgeglichen sein muss.

Weiterhin stehen die Substituenten R unabhängig voneinander für Wasserstoff oder für eine Methylgruppe.

Des Weiteren stehen die Substituenten R¹ unabhängig voneinander für -[AO]_{q}-R⁴. Die Substituenten R² stehen unabhängig voneinander für eine C₁-bis C₂₀-Alkylgruppe, -Cycloalkylgruppe, -Alkylarylgruppe oder für -[AO]_{q}-R⁴. Der Substituent A steht in beiden Fälle unabhängig voneinander für eine C₂-bis C₄-Alkylengruppe und R⁴ für eine C₁- bis C₂₀-Alkylgruppe, -Cyclohexylgruppe oder -Alkylarylgruppe, während q einen Wert von 2 bis 250, insbesondere von 8 bis 200, besonders bevorzugt von 11 bis 150, darstellt.

Des Weiteren stehen die Substituenten R³ unabhängig voneinander für -NH₂, -NR⁵R⁶, -OR⁷NR⁸R⁹. Hierbei stehen R⁵ und R⁶ unabhängig voneinander für eine C₁- bis C₂₀-Alkylgruppe, -Cycloalkylgruppe oder -Alkylarylgruppe oder -Arylgruppe oder für eine Hydroxyalkylgruppe oder für eine Acetoxyethyl-(CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-), oder R⁵ und R⁶ bilden zusammen einen Ring, von dem der Stickstoff ein Teil ist, um einen Morpholin- oder Imidazolinring aufzubauen.

Weiterhin stehen die Substituenten R⁸ und R⁹ je unabhängig voneinander für eine C₁- bis C₂₀-Alkylgruppe, -Cycloalkylgruppe, -Alkylarygruppe, -Arylgruppe oder für eine Hydroxyalkylgruppe.

Die Abfolge der in Formel (I) als s1, s2, s3 und s4 bezeichneten Teilstrukturelemente kann hierbei alternierend, blockartig oder zufällig angeordnet sein.

Schliesslich stellen die Indizes a, b, c und d Molverhältnisse der Struktureinheiten s1, s2, s3 und s4 dar. Diese Strukturelemente stehen in einem Verhältnis von
a/b/c/d = (0.1 - 0.9) / (0.1 - 0.9) / (0 - 0.8) / (0 - 0.3),
insbesondere a/b/c/d = (0.1 - 0.9) / (0.1 - 0.9) / (0 - 0.5) / (0 - 0.1),
bevorzugt a/b/c/d = (0.1 - 0.9) / (0.1 - 0.9) / (0 - 0.3) / (0 - 0.06), zueinander, mit der Massgabe, dass a + b + c + d = 1 ist. Die Summe c + d ist bevorzugt grösser als 0.

Die Herstellung des Kammpolymeren **KP** der Formel (I) kann einerseits durch radikalische Polymerisation der entsprechenden Monomere der Formel (IIIₐ), (III_{b}), (III_{c}) bzw. (III_{d}), welche dann zu den Strukturelementen Struktureinheiten s1, s2, s3 und s4 führen, 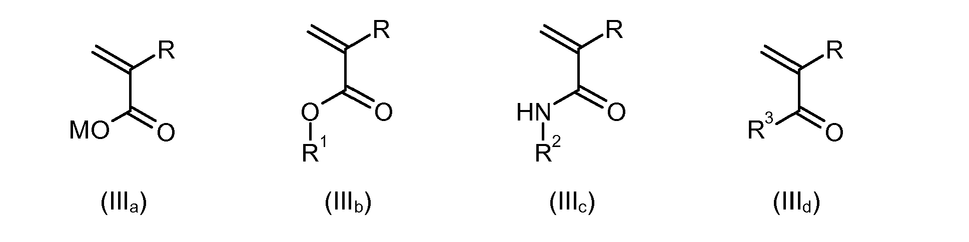 oder andererseits durch eine sogenannte polymer-analoge Umsetzung einer Polycarbonsäure der Formel (IV) erfolgen

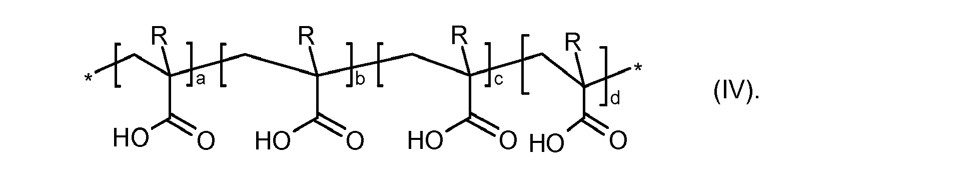

In der polymer-analogen Umsetzung wird die Polycarbonsäure der Formel (IV) mit den korrespondierenden Alkoholen, Aminen verestert oder amidiert und dann allenfalls neutralisiert oder teilneutralisiert (je nach Art des Rest M z.B. mit Metallhydroxiden oder Ammoniak). Details zur polymer-analogen Umsetzung sind offenbart beispielsweise in US 2002/0002218 A1 auf Seite 5 in Abschnitt [0077] bis und mit [0083], sowie in dessen Beispielen oder in US 6,387,176 B1 auf Seite 5, Zeile 18 bis Zeile 58 sowie in dessen den Beispielen. In einer Abart davon, wie sie in US 2006/0004148 A1 auf Seite 1 in Abschnitt [0011] bis und mit [0055] auf Seite 3 sowie in dessen Beispielen beschrieben sind, kann das Kammpolymer **KP** der Formel (I) in festem Aggregatszustand hergestellt werden. Die Offenbarung dieser gerade genannten Patentschriften wird hiermit insbesondere durch Bezugnahme eingeschlossen.

Es hat sich erwiesen, dass eine besonders bevorzugte Ausführungsform der Kammpolymere **KP** der Formel (I) diejenigen sind, in welchen c+d > 0, insbesondere d > 0, sind. Als Rest R³ hat sich insbesondere -NH-CH₂-CH₂-OH als besonderes vorteilhaft erwiesen.

Als besonders vorteilhaft erwiesen haben sich Kammpolymere **KP,** wie sie von Sika Schweiz AG unter der Handelsnamenreihe ViscoCrete® kommerziell vertrieben werden.

Typischerweise beträgt der Gewichtsanteil des Fe(III)-Komplexbildners **X** 0.01 bis 50 Gew.-%, bevorzugt 0.05 bis 20 Gew.-%, insbesondere bevorzugt 0.1 bis 5 Gew.-%, bezogen auf das Gesamtgewicht des Kammpolymers.

Es ist weiter vorteilhaft, dass die Zusammensetzung weiter mindestens ein Antioxidationsmittel aufweist, insbesondere in einer Menge von 0.01 bis 50 Gew.-%, bevorzugt 0.05 bis 10 Gew.-%, insbesondere bevorzugt 0.1 bis 5 Gew.-%, bezogen auf das Gesamtgewicht des Kammpolymers.

Geeignete Antioxidationsmittel sind beispielsweise ausgewählt aus der Gruppe bestehend aus substituierten Phenolen, insbesondere sterisch gehinderten Phenolen; substituierten Hydrochinonen, insbesondere sterisch gehinderten Hydrochinonen; sterisch gehinderten aromatischen Aminen wie Diarylamine; Arylamin-Keton-Kondensationsprodukten; Organoschwefelverbindungen wie Dialkyldithiocarbaminsäuren oder Dialkyldithiophosphiten; Organophosphorverbindungen wie Phosphiten oder Phosphoniten; Tocopherolen und deren Derivaten; Gallussäuren und deren Derivaten und Vanillin.

Besonders geeignet sind Antioxidationsmittel, welche mindestens ein substituiertes Phenol, substituiertes Hydrochinon oder ein substituiertes aromatisches Amin umfassen. Besonders geeignet sind sterisch gehinderte Phenole, sterisch gehinderte Hydrochinone oder sterisch gehinderte aromatische Amine.

Beispiele für sterisch gehinderte Phenole sind 2-t-Butyl-4,6-dimethylphenol, 2,6-di(t-butyl)-4-methylphenol (Butylhydroxytoluol, BHT), 2-t-Butyl-4-methoxyphenol (Butylhydroxyanisol, BHA), Pentaerythrityl-tetrakis-[3-(3,5-ditert.-butyl-4-hydroxyphenyl)-propionat] (Irganox® 1010), 2,6-Dioctadecyl-4-methylphenol, 2,4,6-Tri-t-butylphenol, ortho-tert-Butylphenol, 3,5-Bis(1,1-dimethylethyl)-4-hydroxybenzol-propionsäureester von C4-C22-Alkoholen, 4,4'-Butyliden-bis-(6-t-butyl-3-methylphenol), 4,4'-Methyliden-bis-(2,6-di-t-butylphenol), 3,5-Bis(1,1-ditert.-butyl)-4-hydroxyphenyl-propion-säureester von C4-C22-Alkoholen, 2,2'-Methylen-bis-(6-tert-butyl-4-methylphenol), 2,2-Bis-(4-hydroxyphenyl)-propan (Bisphenol A), 4,4'-Methylenebisphenol (Bisphenol F), 1,1-Bis-(5-t-butyl-4-hydroxy-2-methylphenyl)-butan, 2,2'-Methylen-bis-[4-methyl-6-(1-methylcyclohexyl)-phenol], Tetrakis[methylen-3-(3,5-di-t-butyl-4-hydroxyphenyl)-propionat]-methan, N,N'-Hexamethylenbis(3,5-di-t-butyl-4-hydroxy-hydrozimtsäureamid), Octadecyl-3-(3,5-di-t-butyl-4-hydroxyphenyl)propionat, 1,3,5-Tris-(3,5-di-t-butyl-4-hydroxybenzyl)isocyanurat, 1,1,3-Tris-(5-t-butyl-4-hydroxy-2-methylphenyl)-butan, 1,3,5-Tris-(3,5-di-t-butyl-4-hydroxybenzyl)mesitylen, Ethylenglykol-bis[3,3-bis(3'-t-butyl-4'-hydroxyphenyl)butyrat], Di-(3-t-butyl-4'-hydroxy-5-methylphenyl)dicyclopentadien, 2,2'-Methylen-bis-(4-methyl-6-cyclohexylphenol), 1,3,5-Tri-(3,5-di-t-butyl-4-hydroxybenzyl)-2,4,6-trimethylbenzol (Irganox® 1330), 1,3,5-Tris-(4-t-butyl-3-hydroxy-2,6-dimethylbenzyl)-isocyanurat, 3,5-Di-t-butyl-4-hydroxyphenyl-propionsäureester, 5-t-Butyl-4-hydroxy-3-methylphenyl-propionsäureester, 3,5-Di-t-butyl-4-hydroxyphenyl-propionsäureamide, 3,5-Di-(1,1-dimethylethyl)-4-hydroxybenzolpropionsäureester, 1,6-Hexandiol-bis-(3,5-di-t-butyl-4-hydroxyphenyl)propionat, Triethylenglykol-bis-3-(t-butyl-4-hydroxy-5-methylphenyl)-propionat, 2,2-Bis-(4-hydroxyphenyl)-propan, 2,2'-Thio-bis-(4-methyl-6-t-butylphenol), 2-Methyl-4,6-bis((octylthio)-methyl)phenol (Irganox® 1520), 4,4'-Thio-bis-(6-t-butyl-3-methylphenol), 2,2'-Thiodiethyl-bis-3-(3,5-di-t-butyl-4-hydroxyphenyl)propionat.

Bevorzugt sind 2,6-Di-t-butyl-4-methylphenol (BHT), Octadecyl-3-(3,5-di-t-butyl-4-hydroxyphenyl)propionat, 2,2'-Methylen-bis-(4-methyl-6-cyclohexylphenol), 2,2'-Methylen-bis-(4-methyl-6-t-butylphenol), Triethylenglykol-bis-3-(t-butyl-4-hydroxy-5-methylphenyl)-propionat, 2,2-Bis-(4-hydroxyphenyl)-propan und Tetrakis[methylen-3-(3,5-di-t-butyl-4-hydroxyphenyl)-propionat]methan, oder Antioxidationsmittel, wie sie typischerweise unter dem Markennamen Irganox® der Firma Ciba Spezialitätenchemie vertrieben werden, insbesondere 2-Methyl-4,6-bis((octylthio)-methyl)phenol (Irganox® 1520), Pentaerythrityl-tetrakis-[3-(3,5-ditert.-butyl-4-hydroxyphenyl)-propionat] (Irganox® 1010), oder 1,3,5-Tri-(3,5-di-t-butyl-4-hydroxybenzyl)-2,4,6-trimethylbenzol (Irganox® 1330).

Beispiele für sterisch gehinderte Hydrochinone sind 2,6-Di-t-butyl-4-methoxyphenol, 2,5-Di-t-butyl-hydrochinon.

Beispiele für sterisch gehinderte aromatische Amine und Arylamin-Keton-Kondensationsprodukte sind N,N'-Bis-(1,4-dimethyl-pentyl)-p-phenylendiamin, N,N'-Diphenyl-p-phenylendiamin, 4-(p-Toluol-sulfonamido)-diphenylamin, 4-n-Butylaminophenol, 4,4'-Di-t-octyldiphenylamin, 4,4'-Di-(alpha,alpha-dimethylbenzyl)-diphenylamin, Phenyl-beta-naphthylamin, N-Isopropyl-N'-phenyl-p-phenylendiamin, und/oder Phenyl-2-aminonaphthalin.

Beispiele für Organoschwefelverbindungen sind 2,2'-Thio-bis-(4-methyl-6-t-butylphenol), 2-Methyl-4,6-bis((octylthio)-methyl)phenol (Irganox® 1520), 4,4'-Thio-bis-(6-t-butyl-3-methylphenol), 2,2'-Thiodiethyl-bis-3-(3,5-di-t-butyl-4-hydroxyphenyl)propionat, 2,4-Bis-(n-octylthio)-6-(4-hydroxy-3,5-di-t-butylanilino)-1,3,5-triazin, Di-Lauryl-3,3'-thiodipropionat, Di-Stearyl-3,3'-thiodipropionat, Natriumdithionit, Toluolsulfinsäure oder deren Derivate, beispielsweise Natriumhydroxymethansulfinat-Dihydrat (Rongalit® C).

Beispiele für Organophosphorverbindungen sind 3,5-Di-t-butyl-4-hydroxybenzyl-phosphonsäure-dioctadecylester, Trimethylphosphit, Triethylphosphit, Triphenylphosphit, Distearylpentaerythritdiphosphit, Tris-(nonylphenyl)-phosphit, Tetrakis-(2,4-di-t-butylphenyl-4,4'-biphenylendiphosphonit, Tris-(2,4-di-t-butylphenyl)phosphit, Neopentylglykoltriethylenglykoldiphosphit, Diisodecylpentaerythritdiphosphit, Tristearylphosphit, Trilaurylphosphit, Na-Hypophosphit oder Triphenylphosphit.

In einer bevorzugten Ausführungsform ist das Antioxidationsmittel ein substituiertes Phenol, insbesondere ein sterisch gehindertes Phenol. Derartige Antioxidationsmittel sind beispielsweise unter dem Namen Irganox® bei der Firma Ciba erhältlich. Vorzugsweise ist das substituierte Phenol ausgewählt aus der Gruppe bestehend aus Butylhydroxytoluol (BHT), Butylhydroxyanisol (BHA), Bisphenol A, Bisphenol F, Salicylsäure, Hydrochinon, Vanillin, Biphenyldiol, beispielsweise 4,4'-Biphenyldiol oder 2,2'-Biphenyldiol, Gallate und Phenolpolykondensate.

Die Zusammensetzung, wie sie vorgehend beschrieben wurde, kann sowohl in flüssiger als auch in fester Form, sowohl allein oder als Bestandteil einer weiteren Zusammensetzung, als Dispergiermittel, insbesondere als Verflüssiger; als Mahlhilfsmittel, als Verdicker oder als Zementveredler eingesetzt werden.

Die Zusammensetzung, wie sie vorgehend beschrieben wurde, kann weitere Bestandteile enthalten. Beispiele für weitere Bestandteile sind Lösungsmittel oder Additive, wie Mahlhilfsmittel, beispielsweise Glycole oder Alkanolamine wie Triisopropanolamin (TIPA) oder Triethanolamin (TEA); Verfüssiger, beispielsweise Lignosulfonate, sulfonierte Naphthalin-Formaldehyd-Kondensate, oder sulfonierte Melamin-FormaldehydKondensate; Beschleuniger; Verzögerer; Schwindreduzierer; Entschäumer; Schaumbildner oder Bestandteile, welche eine Entmischung des Frischbetons, insbesondere das Absondern von Wasser (Bluten), vermindern und das Zusammenhaltevermögen des Frischbetons verbessern.

Falls die Zusammensetzung in flüssiger Form verwendet wird, wird für die Umsetzung vorzugsweise ein Lösungsmittel eingesetzt. Bevorzugte Lösungsmittel sind beispielsweise Alkohole, insbesondere Ethanol oder Isopropanol, und Wasser, wobei Wasser das am meist bevorzugte Lösungsmittel ist. Je nach Art der Zusammensetzung entsteht eine Dispersion oder eine Lösung. Bevorzugt wird eine Lösung.

Die Zusammensetzung kann auch in festem Aggregatszustand vorliegen. Unter einer Zusammensetzung im festen Aggregatszustand versteht man im Sinne der Erfindung Zusammensetzungen, die bei Raumtemperatur im festen Aggregatzustand vorliegen und beispielsweise Pulver, Schuppen, Pellets, Granulate oder Platten sind und sich in dieser Form problemlos transportieren und lagern lassen.

In einem weiteren Aspekt betrifft die vorliegende Erfindung eine Zusammensetzung umfassend ein Kammpolymer, ein mineralisches Bindemittel und einen Komplex aus Fe(III) mit mindestens einem Fe(III)-Komplexbildner **X** und gegebenenfalls anderen Komplexbildnern, wobei es sich bei dem Fe(III)-Komplexbildner **X** um einen Fe(III)-Komplexbildner **X** handelt, wie er vorgehend beschrieben wurde.

Das mineralisches Bindemittel typischerweise ein hydraulisches Bindemittel, ein latent hydraulisches Bindemittel oder ein nicht-hydraulisches Bindemittel, insbesondere ein Zement, bevorzugt ein Portlandzement, respektive dessen Mischungen mit Flugaschen, Silica fume, Hüttensande und Kalksteinfüller.

Typischerweise beträgt der Gewichtsanteil des Kammpolymers 0.01 bis 10 Gew.-%, bevorzugt 0.2 bis 2 Gew.-%, bezogen auf das Gesamtgewicht des mineralischen Bindemittels.

In einem weiteren Aspekt betrifft die vorliegende Erfindung ein Verfahren zur Stabilisierung von Kammpolymeren in Gegenwart von Fe(III), worin den Kammpolymeren mindestens ein Fe(III)-Komplexbildner **X** zugegeben wird. Beim Kammpolymer und beim Fe(III)-Komplexbildner **X** handelt es sich um Kammpolymere und Fe(III)-Komplexbildner **X,** wie sie vorhergehend beschrieben wurden.

Unter dem Begriff "Stabilisierung" wird insbesondere verstanden, dass die Kammpolymere über eine längere Zeit nicht abgebaut werden und somit ihre Wirkung, beispielsweise als Dispergiermittel, Mahlhilfsmittel, Verdicker oder Zementveredler, aufrecht erhalten bleibt. Vorzugsweise bleibt die Stabilisierung des Kammpolymers über mindestens eine Woche, vorzugsweise mindestens 4 Wochen, erhalten.

Vorzugsweise wird der Fe(III)-Komplexbildner **X** in einer Menge von 0.01 bis 50 Gew.-%, bevorzugt 0.05 bis 20 Gew.-%, bezogen auf das Gesamtgewicht des Kammpolymers, verwendet.

Es ist weiter von Vorteil, wenn zusätzlich mindestens ein Antioxidationsmittel zugegeben wird. Als Antioxidationsmittel sind Verbindungen geeignet, wie sie vorgehend als geeignet als Antioxidationsmittel beschrieben wurden.

Vorzugsweise wird das mindestens eine Antioxidationsmittel in einer Menge von 0.01 bis 50 Gew.-%, bevorzugt 0.05 bis 10 Gew.-%, bezogen auf das Gesamtgewicht des Kammpolymers, verwendet.

Vorzugsweise handelt es sich bei dem Verfahren um ein Verfahren bei einer Temperatur von mindestens 40°C, vorzugsweise von 80 - 160°C.

Vorzugsweise handelt es sich bei dem Verfahren um ein Verfahren zur Stabilisierung von Polymeren in Gegenwart von Fe(III) in einem mineralischen Bindemittel. Als mineralisches Bindemittel sind Verbindungen geeignet, wie sie vorgehend als geeignet als mineralisches Bindemittel beschrieben wurden.

Beispielsweise werden Zementklinker nach dem Brennprozess bei über 1000°C üblicherweise auf eine Temperatur von etwa 100 bis 200°C abgekühlt und normalerweise bei einer Temperatur von etwa 80 bis 150°C, insbesondere bei etwa 80 bis 120°C gelagert, beispielsweise in Silos. Somit können beim Verfahren Temperaturen von mindestens 40°C, vorzugsweise von 80 - 160°C, beim Mahlen, insbesondere beim Mahlen des Zementklinkers zu Zement, auftreten. Ferner bei der anschliessenden Lagerung und/oder Transport des mineralischen Bindemittels, insbesondere durch Sonneneinstrahlungs-bedingte Erwärmung der Lager-, Transport- oder Verpackungsbehältnisse. Daher handelt es sich vorzugsweise um ein Verfahren zur Stabilisierung von Kammpolymeren in Gegenwart von Fe(III) in mineralischen Bindemitteln und bei einer Temperatur von mindestens 40°C, vorzugsweise von 80 - 160°C, wobei diese Temperatur beim Mahlen des mineralischen Bindemittels und/oder anschliessender Lagerung auftritt.

Die Zugabe der Kammpolymers und/oder des Fe(III)-Komplexbildners **X** und/oder der Antioxidationsmittel zum mineralischen Bindemittel kann gleichzeitig oder zeitlich versetzt stattfinden.

Die Zugabe der Kammpolymere und/oder des Fe(III)-Komplexbildners **X** und/oder der Antioxidationsmittel zum mineralischen Bindemittel kann beim Fördern des mineralischen Bindemittels, insbesondere beim Fördern von Zement, auf das mineralische Bindemittel aufgetragen werden. Vorzugsweise wird dem mineralischen Bindemittel, insbesondere Zement, während des Förderungsprozesses, beispielsweise in Transportkanälen, zur Lagerstätte, beispielsweise zum Silo oder zu Transportmitteln wie z.B. einem Lastwagen, die Kammpolymere und/oder der Fe(III)-Komplexbildner **X** und/oder das Antioxidationsmittel zugegeben.

Die Zugabe der Kammpolymere und/oder des Fe(III)-Komplexbildners **X** und/oder der Antioxidationsmittel zum mineralischen Bindemittel kann weiter vor dem Mahlen des mineralischen Bindemittels, insbesondere vor und/oder während dem Mahlen des Zementklinkers, zum mineralischen Bindemittel zugegeben werden.

In einer bevorzugten Ausführungsform wird der Fe(III)-Komplexbildner **X** vorgängig mit dem Kammpolymer (und gegebenenfalls mit einem Antioxidationsmittel) vermischt und diese Mischung wird dann zu einem gewünschten Zeitpunkt während des Herstellprozesses des mineralischen Bindemittels, insbesondere des Zements, beispielsweise vor dem Mahlen, oder beim Fördern des mineralischen Bindemittels vor der Lagerung, mit dem mineralischen Bindemittel vermischt, oder auf das mineralische Bindemittel aufgetragen, so dass beispielsweise ein mineralisches Bindemittel entsteht, welches mit der Mischung aus Fe(III)-Komplexbildner **X** und Kammpolymer (und eventuell Antioxidationsmittel) beschichtet ist. Die Förderung oder der Transport des mineralischen Bindemittels kann über dem Fachmann bekannte Vorrichtungen erfolgen, beispielsweise über Luftförderrinnen, wo der Transport pneumatisch und gravimetrisch erfolgt. Der Mahlprozess erfolgt üblicherweise in einer Zementmühle, beispielsweise in einer Kugelmühle. Es können aber grundsätzlich auch andere Mühlen, wie sie in der Zementindustrie bekannt sind, eingesetzt werden.

In einem weiteren Aspekt betrifft die vorliegende Erfindung eine Verwendung eines Fe(III)-Komplexbildner **X** zur Stabilisierung von Kammpolymeren in Gegenwart von Fe(III).

Beim Kammpolymer und beim Fe(III)-Komplexbildner **X** handelt es sich um Kammpolymere und Fe(III)-Komplexbildner **X,** wie sie vorhergehend beschrieben wurden.

### Beispiele

Die Erfindung wird nun anhand von Beispielen näher erläutert.

### 1. Verwendete Rohstoffe

**Tabelle 1: Verwendete Rohstoffe**

| **Nr.** | **Art** | **Hersteller** |
|---|---|---|
| **KB-1** | 2-Aminothiazol | Fluka, Schweiz |
| **KB-2** | Benzylthiocyanat | Fluka, Schweiz |
| **KB-3** | Ethylendiamintetraessig-säure (EDTA) | Fluka, Schweiz |
| **AntO** | sterisch gehindertes Phenol | |
| **F2S** | Eisen(II)sulfat Heptahydrat | Merck Chemicals, Deutschland |
| **F3S** | Eisen(III)sulfat Hydrat | Fluka, Schweiz |
| **NaSCN** | Natriumthiocyanat | Fluka, Schweiz |

### 2. Mörteltests

Die Wirksamkeit der erfindungsgemässen Zusammensetzungen wurde im Mörtel getestet.

In einem ersten Schritt wurde Portlandzement (Schweizer CEM I 42.5R), durch Mischung in einem Küchenmixer (Moulinex), mit 1 Gew.-% Kammpolymer (Sika® ViscoCrete® 110 CH, erhältlich bei Sika Schweiz AG), bezogen auf das Gewicht des Portlandzements, und gegebenenfalls zusätzlich mit einer in Tabelle 2 angegebenen Menge (bezogen auf Gesamtgewicht des Kammpolymers) eines Fe(III)-Komplexbildners **X (KB),** eines Antioxidationsmittels **(AntO)** oder einem Fe(III)-Komplexbildners **X** zusammen mit einem Antioxidationsmittel, beschichtet. Der so beschichtete Zement wurde entweder sofort verwendet oder in einen Transportbehälter bei 60°C für die in Tabelle 2 angegebene Dauer gelagert, bevor er zur Herstellung von Mörtelmischungen verwendet wurde.

Aus dem beschichteten Zement wurde folgende Mörtelmischung hergestellt:

| Zusammensetzung der Mörtelmischung: (Grösstkorn 8mm) | Menge in g |
|---|---|
| Beschichteter Portlandzement (Schweizer CEM II/A-LL 42.5N) | 750 |
| Kalksteinfüller | 141 |
| Sand 0-1 mm | 738 |
| Sand 1-4 mm | 1107 |
| Sand 4-8 mm | 1154 |

Die Sande, der Füller und der beschichtete Zement wurden 1 Minute in einem Hobart-Mischer trocken gemischt. Innerhalb von 30 Sekunden wurde das Anmachwasser zugegeben und noch weitere 2.5 Minuten gemischt. Der Wasser/Zement-Wert (w/z-Wert) betrug 0.46. Zur Bestimmung der Wirksamkeit wurde das Ausbreitmass (ABM) (Tabelle 2) des Mörtels in Anlehnung an EN 1015-3 nach 0 Minuten bestimmt. Die verwendete Bestimmung des Ausbreitmasses unterscheidet sich dahingehend von EN 1015-3, dass auf das Anheben und Fallenlassen des Ausbreittisches verzichtet wurde.

Die Beispiele**1** bis **6** stellen erfindungsgemässe Beispiele dar, während die Beispiele **7** bis **12** Vergleichsbeispiele darstellen.

**Tabelle 2: Ausbreitmass (ABM) einer Mörtelmischung in mm nach 0 Minuten (min), bei sofortiger Verwendung des beschichteten Zements oder bei einer Lagerung des beschichteten Zements bei 60°C von 2, 3 und 7 Tagen (d).**

| **Nr.** | **Additive** | **Gew.-% Additive,** bez. auf das Kammpolymer | **Tage (d) nach** **Lagerung 60 °C** | **ABM** **(mm)** **0 min** |
|---|---|---|---|---|
| **1** | **KB 1** | 8 Gew.-% | 3 | 226 |
| **2** | **KB-1** | 8 Gew.-% | 7 | 143 |
| **3** | **KB-2** | 8 Gew.-% | 2 | 226 |
| **4** | **KB-3** | 10 Gew.-% | 3 | 108 |
| **5** | **KB-1, AntO** | 5 Gew.-%**(KB-1)**, 0.5 Gew.-% **(AntO)** | 3 | 227 |
| **6** | **KB-1, AntO** | 5 Gew.-%**(KB** -1), 0.5 Gew.-% **(AntO)** | 7 | 225 |
| **7** | - | - | sofort verwendet | 227 |
| **8** | - | - | 2 | 100 |
| **9** | - | - | 3 | 100 |
| **10 -** | | - | 7 | 100 |
| **11** | **AntO** | 0.5 Gew.-% | 3 | 184 |
| **12** | **AntO** | 0.5 Gew.-% | 7 | 146 |

Die Resultate in Tabelle 2 zeigen, dass die erfindungsgemässen Zusammensetzungen geeignet sind, um Kammpolymere auch bei erhöhter Temperatur (60°C) zu stabilisieren.

### 3. Chromatreduktion

Die Wirksamkeit der Chromatreduktion durch Eisen(II)-sulfat Heptahydrat **(F2S)** in Gegenwart von 2-Aminothiazol **(KB-1)** wurde im Beton getestet.

20 g Zement (CEM II/A-LL 42.5N), 40 g Wasser und gegebenenfalls in Tabelle 3 aufgeführte Additive wurden 15 Minuten unter intensivem Rühren auf einem Magnetrührwerk vermischt und anschliessend über einem Whatman 597 ½ Faltenfilter abfiltriert. Der Cr(VI)-Gehalt des Durchflusses wurde reflektrometrisch mittels eines Chromat-Tests von Merck, Deutschland, gemäss den Anweisungen des Herstellers, bestimmt.

**Tabelle 3: Cr(VI)-Gehalt in ppm des abfiltrierten Durchflusses.**

| **Nr.** | **Additive** | **Gew.-% Additive,** bez. auf Gewicht Zement | **Konz.** **Cr(VI)(ppm)** |
|---|---|---|---|
| **13** | **-** | - | 5.5 |
| **14** | **F2S** | 0.4 Gew.-% | 0.3 |
| **15** | **KB-1** | 0.4 Gew.-% | 5.1 |
| **16** | **KB-1, F2S** | 0.4 Gew.-% **(KB-1),** 0.4 Gew.-% (Fe(II)sulfat) | 0.2 |

In Tabelle 3 ist ersichtlich, dass die Wirkung der Cr(VI)-Reduktion durch Eisen(II)sulfat Heptahydrat durch die Zugabe von 2-Aminothiazol nicht beeinträchtigt wird.

### 4. Reduktion von Fe(III) zu Fe(II)

40 g Wasser und 0.2 g Fe(III)sulfat Hydrat **(F3S-Lösung)** und gegebenenfalls 0.6 g 2-Aminothiazol **(KB-1)** wurden 15 Minuten unter intensivem Rühren auf einem Magnetrührwerk vermischt, der pH auf 5 eingestellt und anschliessend nach 2 min, respektive 17 Stunden, ein Eisen(II)-Nachweis durchgeführt. Der Eisen(II)-Nachweis erfolgte mittels eines Reflektoquant Eisen(II)-Tests von Merck, Deutschland, gemäss den Anweisungen des Herstellers.

**Tabelle 4: Nachweis von Fe(II).**

| **Nr.** | **Lösung** | **Probennahme** | **Fe(II)-Nachweis** |
|---|---|---|---|
| **17** | **F3S Lösung** | nach 2 min | unterhalb Nachweisgrenze |
| **18** | **F3S Lösung** | nach 17 h | unterhalb Nachweisgrenze |
| **19** | **F3S Lösung, KB-1** | nach 2 min | unterhalb Nachweisgrenze |
| **20** | **F3S Lösung, KB-1** | nach 17 h | positiver Nachweis von Fe(II) |

Aus Tabelle 4 ist ersichtlich, dass 2-Aminothiazol eine Reduktion von Fe(III) zu Fe(II) bewirkt.

### 5. Selektivität

In einem ersten Versuch wurden in 40 g Wasser 0.2 g Fe(II)sulfat Heptahydrat **(F2S)** unter intensivem Rühren auf einem Magnetrührwerk gelöst. Anschliessend wurde der Eisen(II)-Gehalt bestimmt. In einem zweiten Versuch wurden in 40 g Wasser 0.2 g Fe(II)sulfat Heptahydrat **(F2S)** unter intensivem Rühren auf einem Magnetrührwerk gelöst. Danach wurden 0.6 g 2-Aminothiazol **(KB-1)** zugegeben. Anschliessend wurde der Eisen(II)-Gehalt bestimmt.

Die Eisen(II)-Gehaltsbestimmung erfolgte mittels eines Reflektoquant Eisen(II)-Tests von Merck, Deutschland, gemäss den Anweisungen des Herstellers.

**Tabelle 5: Fe(II)-Gehalt in mg/l.**

| **Nr.** | **Lösung** | **Additive** | **Konz. Fe(II)(mg/L)** |
|---|---|---|---|
| **21** | **F2S Lsg** | - | 20 |
| **22** | **F2S Lsg** | **KB-1** | 19 |

In Tabelle 5, insbesondere im Vergleich zu Tabelle 4, ist ersichtlich, dass 2-Aminothiazol mit Fe(II) im Gegensatz zu Fe(III) kaum Komplexe bildet und somit gegenüber Fe(II) einen selektiven Fe(III)-Komplexbildner darstellt.

### 6. Komplexbildung

In 40 g Wasser wurden 0.2 g Fe(III)sulfat Hydrat (F3S) unter intensivem Rühren auf einem Magnetrührwerk gelöst und der pH auf 5 eingestellt. Anschliessend wurde in einem ersten Versuch 1 g Natriumthiocyanat (**NaSCN**) zugegeben, nach 1 min die Lösung auf eine mögliche Farbänderung hin untersucht, 1 g 2-Aminothiazol **(KB-1)** zugegeben, nach 1 min die Lösung erneut auf eine mögliche Farbänderung hin untersucht. In einem zweiten Versuch wurden (**NaSCN**) und (**KB-1**) in umgekehrter Reihenfolge zugegeben.

**Tabelle 6: Nachweis von Fe(II).**

| **Nr.** | **Lösung** | **Zugabe 1** | **Farbe der Lsg.** | **Zugabe 2** | **Farbe der Lsg.** |
|---|---|---|---|---|---|
| **23** | **F3S Lsg** | **NaSCN** | Braunfärbung | **KB-1** | Gelbfärbung (Änderung) |
| **24** | **F3S Lsg** | **KB-1** | Gelbfärbung | **NaSCN** | Gelbfärbung (keine Änderung) |

Aus Tabelle 6 ist ersichtlich, dass 2-Aminothiazol als Fe(III)-Komplexbildner geeignet ist und gegenüber Natriumthiocyanat stärkere Fe(III)-Komplexe bildet.

Selbstverständlich ist die Erfindung nicht auf die gezeigten und beschriebenen Ausführungsbeispiele beschränkt.

## Patentansprüche

1. Zusammensetzung umfassend ein Kammpolymer und mindestens einen Fe(III)-Komplexbildner **X,** welcher ausgewählt ist aus der Gruppe bestehend aus Thiocyanaten, kondensierten Phosphaten, Aminen, Aminoessigsäuren, Oxycarbonsäuren und Verbindungen der Formel (V), wobei bei Verbindungen der Formel (V) 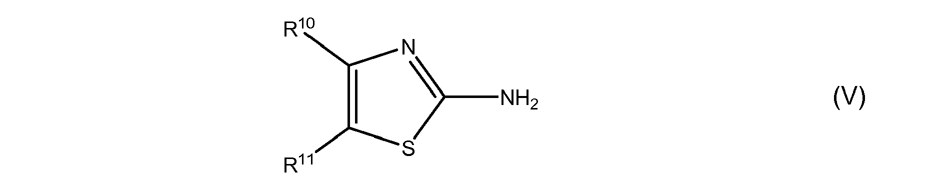 R¹⁰ und R¹¹ unabhängig voneinander für H, Halogenatom, NO₂ oder einen, allenfalls verzweigten, gesättigten oder ungesättigten Alkylrest mit 1 bis 25 C-Atomen oder einen Arylrest mit 6 bis 14 C-Atomen oder einen Acylrest mit 1 bis 10 C-Atomen oder einen Carbonylrest mit 1 bis 10 C-Atomen oder einen Carboxylrest mit 1 bis 10 C-Atomen stehen, oder
R¹⁰ und R¹¹ Teil von einem aromatischen oder cycloaliphatischen Ring, insbesondere einem aromatischen 6-Ring, sind.

2. Zusammensetzung gemäss Anspruch 1, **dadurch gekennzeichnet, dass** der Fe(III)-Komplexbildner **X** eine Komplexbildungskonstante für Fe(III) aufweist, die 10-mal, insbesondere 1000-mal, grösser ist als die Komplexbildungskonstante für Fe(II).

3. Zusammensetzung gemäss einem der vorhergehenden Ansprüche, **dadurch gekennzeichnet, dass** der Fe(III)-Komplexbildner **X** eine Reduktion von Fe(III) zu Fe(II) bewirkt.

4. Zusammensetzung gemäss einem der vorhergehenden Ansprüche, **dadurch gekennzeichnet, dass** der Gewichtsanteil des Fe(III)-Komplexbildners **X** 0.01 bis 50 Gew.-%, bevorzugt 0.05 bis 20 Gew.-%, bezogen auf das Gesamtgewicht des Kammpolymers, beträgt.

5. Zusammensetzung gemäss einem der vorhergehenden Ansprüche, **dadurch gekennzeichnet, dass** die Zusammensetzung weiter mindestens ein Antioxidationsmittel aufweist, insbesondere in einer Menge von 0.01 bis 50 Gew.-%, bevorzugt 0.05 bis 10 Gew.-%, bezogen auf das Gesamtgewicht des Kammpolymers.

6. Zusammensetzung gemäss Anspruch 5, **dadurch gekennzeichnet, dass** das Antioxidationsmittel ausgewählt ist aus der Gruppe bestehend aus substituierten Phenolen, insbesondere sterisch gehinderten Phenolen; substituierten Hydrochinonen, insbesondere sterisch gehinderten Hydrochinonen; sterisch gehinderten aromatischen Aminen wie Diarylamine; Arylamin-Keton-Kondensationsprodukten; Organoschwefelverbindungen wie Dialkyldithiocarbaminsäuren oder Dialkyldithiophosphiten; Organophosphorverbindungen wie Phosphiten oder Phosphoniten; Tocopherolen und deren Derivaten; Gallussäuren und deren Derivaten und Vanillin.

7. Zusammensetzung umfassend ein Kammpolymer, ein mineralisches Bindemittel und einen Komplex aus Fe(III) mit mindestens einem Fe(III)-Komplexbildner **X** und gegebenenfalls anderen Komplexbildnern, wobei es sich bei dem Fe(III)-Komplexbildner **X** um einen Fe(III)-Komplexbildner **X** handelt, wie er in der Zusammensetzung nach einem der Ansprüche 1 - 4 beschrieben ist.

8. Zusammensetzung gemäss Anspruch 7, **dadurch gekennzeichnet, dass** das mineralisches Bindemittel ein hydraulisches Bindemittel, ein latent hydraulisches Bindemittel oder ein nicht-hydraulisches Bindemittel ist, insbesondere ein Zement, bevorzugt ein Portlandzement, respektive dessen Mischungen mit Flugaschen, Silica fume, Hüttensande und Kalksteinfüller.

9. Zusammensetzung gemäss Anspruch 7 oder 8, **dadurch gekennzeichnet, dass** der Gewichtsanteil des Kammpolymers 0.01 bis 10 Gew.-%, bevorzugt 0.2 bis 2 Gew.-%, bezogen auf das Gesamtgewicht des mineralischen Bindemittels, beträgt.

10. Verfahren zur Stabilisierung von Kammpolymeren in Gegenwart von Fe(III), **dadurch gekennzeichnet, dass** den Kammpolymeren mindestens ein Fe(III)-Komplexbildner **X** zugegeben wird, wobei es sich bei dem Fe(III)-Komplexbildner **X** um einen Fe(III)-Komplexbildner **X** handelt, wie er in der Zusammensetzung nach einem der Ansprüche 1 - 4 beschrieben ist.

11. Verfahren nach Anspruch 10, **dadurch gekennzeichnet, dass** mindestens ein Antioxidationsmittel zugegeben wird.

12. Verfahren nach einem der Ansprüche 10 oder 11, **dadurch gekennzeichnet, dass** es sich bei dem Verfahren um ein Verfahren bei einer Temperatur von mindestens 40°C, vorzugsweise von 80 - 160°C, handelt.

13. Verfahren nach einem der Ansprüche 10 bis 12, **dadurch gekennzeichnet, dass** es sich bei dem Verfahren um ein Verfahren in einem mineralischen Bindemittel handelt.

14. Verfahren nach Anspruch 10 oder 11, **dadurch gekennzeichnet, dass** es sich bei dem Verfahren um ein Verfahren zur Stabilisierung von Kammpolymeren in Gegenwart von Fe(III) in mineralischen Bindemitteln und bei einer Temperatur von mindestens 40°C, vorzugsweise von 80 - 160°C, wobei diese Temperatur beim Mahlen des mineralischen Bindemittels und/oder anschliessender Lagerung auftritt.

15. Verwendung eines Fe(III)-Komplexbildners **X** zur Stabilisierung von Kammpolymeren in Gegenwart von Fe(III), **dadurch gekennzeichnet, dass** es sich bei dem Fe(III)-Komplexbildner **X** um einen Fe(III)-Komplexbildner **X** handelt, wie er in der Zusammensetzung nach einem der Ansprüche 1 - 4 beschrieben ist.
